# FASCICULE DE BREVET EUROPEEN

(11) **EP 3 717 094 B1**
(45) Date de publication et mention de la délivrance du brevet: **03.11.2021**
(21) Numéro de dépôt: 18827207.4
(22) Date de dépôt: 29.11.2018
(51) Int. Cl.: B01D 24/10, B01D 24/14, B01D 24/46, E04H 4/12

(54) **DISPOSITIF IMMERGE DE FILTRATION POUR PISCINE**
TAUCHFILTER FÜR EIN SCHWIMMBAD
IMMERGED SWIMMING POOL FILTRATION DEVICE

(30) Priorité: 30.11.2017 FR 1761434
(43) Date de publication de la demande: 07.10.2020
(73) Titulaire: PISCINES DESJOYAUX SA, 42480 La Fouillouse (FR)
(72) Inventeur: DESJOYAUX, Jean-Louis, 42600 Chalain-le-Comtal (FR); DEJEY, Marc, 73100 Aix-les-Bains (FR); BONNEFOY, Serge, 42170 Saint-Just-Saint-Rambert (FR)
(74) Mandataire: IP Trust
(86) Numéro de dépôt international: PCT/FR2018/053046
(87) Numéro de publication internationale: WO 2019/106307

(56) Documents cités:
- EP-A1- 1 369 544
- EP-A1- 1 589 165
- WO-A1-2012/021935
- US-A- 3 616 468

## Description

### DOMAINE DE L'INVENTION

La présente invention concerne le domaine des systèmes de filtration pour piscines et bassins. Elle concerne en particulier un dispositif de filtration immergé compatible avec un rétro-lavage.

### ARRIERE PLAN TECHNOLOGIQUE DE L'INVENTION

Il existe de nombreux types de dispositifs de filtration non immergés pour piscine et bassins. On peut citer à titre d'exemple l'unité de filtration décrite dans le document US20160002941. Cette dernière présente une pluralité de modules de filtres à sable et une fonction de nettoyage des filtres par écoulement d'eau à contre-courant.

Les systèmes de filtration de l'eau de piscine comprenant un dispositif de filtration immergé apparaissent plus avantageux car ils offrent une plus grande compacité et limitent l'étendue des canalisations d'eau. Un tel dispositif immergé comprend classiquement un filtre, par exemple en tissu, plongé dans l'eau du bassin, et une pompe qui assure la circulation de l'eau, par aspiration, dans le filtre, et son refoulement dans le bassin après filtration. Lorsque le filtre est encrassé, il est extrait du bassin et nettoyé, par exemple sous un jet d'eau.

Autres exemples d'unité de filtration sont décrites dans les documents EP 1 369 544 A1, EP 1 589 165 A1, US 3 616 468 A et WO 2012/021935 A1.

Il serait souhaitable de disposer d'un dispositif de filtration immergé ne nécessitant plus cette étape d'extraction et de nettoyage.

Comme énoncé précédemment, on connait des moyens de nettoyage pour les dispositifs de filtration non immergé (filtre inox, à sable), consistant à faire circuler un courant d'eau contraire, de sorte à expulser du filtre les particules qui y seraient piégées. Néanmoins, ces techniques ne sont pas directement applicables aux dispositifs immergés de filtration, car cela conduirait à rejeter les particules extraites du filtre dans l'eau du bassin.

### OBJET DE L'INVENTION

La présente invention vise à pallier tout ou partie des inconvénients précités. L'invention concerne un dispositif immergé de filtration de l'eau d'un bassin, compatible avec un nettoyage par circulation d'eau à contre-courant (rétro-lavage). L'invention concerne également un système de filtration comprenant ledit dispositif immergé.

### BREVE DESCRIPTION DE L'INVENTION

La présente invention concerne un dispositif immergé de filtration de l'eau d'un bassin, comprenant un bol de filtration présentant une première extrémité pour recueillir l'eau à filtrer du bassin et une seconde extrémité destinée à être reliée à un premier conduit de sortie de l'eau filtrée.

Le dispositif immergé de filtration comprend :
- Un module à clapet, solidaire de la première extrémité du bol de filtration, pour bloquer le refoulement de l'eau à travers la première extrémité, lors d'un rétro-lavage du bol de filtration ;
- Un conduit de vidange, en communication avec le bol de filtration, pour évacuer l'eau du bol de filtration lors du rétro-lavage.

Selon d'autres caractéristiques avantageuses et non limitatives de l'invention, prises seules ou selon toute combinaison techniquement réalisable :
- le bol de filtration est de forme cylindrique ;
- le module à clapet comprend un clapet mobile selon un axe parallèle à l'axe du bol de filtration, pour libérer ou obturer une ouverture à clapet, le diamètre de ladite ouverture à clapet étant compris entre 50% et 90% du diamètre de la section du bol de filtration ;
- le module à clapet présente une ouverture à clapet, déportée par rapport à la première extrémité, vers l'intérieur du bol de filtration ;
- le conduit de vidange est situé dans une zone comprise entre la première extrémité et l'ouverture à clapet ;
- le conduit de vidange comprend un clapet de désamorçage ;
- le bol de filtration est un filtre à sable et comprend une colonne de sable sous le module à clapet et un filtre à plancher solidaire de sa seconde extrémité ;
- le bol de filtration comprend un panier tamis entre le module à clapet et la colonne de sable ;
- le bol de filtration comprend une colonne de sable ou de toutes autres matières solides ou fibreuses, aptes à filtrer ;
- le filtre à plancher présente une forme cylindrique et est composé de fils d'acier inoxydable ou plastique ;
- les fils présentent une épaisseur de 4 mm, un profil triangulaire et sont espacés les uns des autres de moins de 500 microns ;
- le dispositif immergé de filtration comprend un panier grille disposé sur le module à clapet, pour une filtration grossière de l'eau ;
- le dispositif immergé de filtration comprend un clapet multi-trous présentant une pluralité d'orifices et disposé entre le filtre à plancher et le premier conduit de sortie, ledit clapet étant configuré pour être ouvert lorsque le dispositif de filtration est dans un mode de filtration et pour être fermé lorsque le dispositif est dans un mode de rétro-lavage ;
- le dispositif immergé de filtration comprend un clapet de décharge disposé dans une dérivation au niveau du premier conduit de sortie, pour by-passer le bol de filtration ;
- le dispositif immergé de filtration comprend une tringlerie pour actionner manuellement le clapet de décharge.

La présente invention concerne également un système de filtration pour un bassin comprenant :
- un dispositif immergé de filtration tel que ci-dessus,
- un dispositif de pompage, comprenant une pompe, le premier conduit de sortie de l'eau filtrée, et un deuxième conduit de refoulement de l'eau filtrée dans le bassin ; le dispositif de pompage étant apte à faire circuler l'eau sélectivement, selon un courant de filtration, du premier vers le deuxième conduit, ou selon un contre-courant, du deuxième vers le premier conduit, pour le rétro-lavage du bol de filtration.

Selon d'autres caractéristiques avantageuses et non limitatives de l'invention, prises seules ou selon toute combinaison techniquement réalisable :
- le dispositif de pompage comprend une vanne à cinq voies, permettant la circulation sélective de l'eau selon un courant de filtration ou selon un contre-courant ;
- le dispositif de pompage comprend deux vannes à trois voies, permettant la circulation sélective de l'eau selon un courant de filtration ou selon un contre-courant ;
- la pompe comprend un variateur de vitesse ;
- la pompe comprend un moteur « brushless »
- le système de filtration comprend deux clapets de sécurité respectivement positionnés sur deux branches communiquant avec le deuxième conduit de refoulement :
   ∘ le premier clapet de sécurité étant configuré pour s'ouvrir lorsque la circulation de l'eau est établie selon un courant de filtration, le deuxième clapet de sécurité étant fermé,
   ∘ le deuxième clapet de sécurité étant configuré pour s'ouvrir lorsque la circulation de l'eau est établie selon un contre-courant, le premier clapet de sécurité étant fermé.

### BREVE DESCRIPTION DES DESSINS

D'autres caractéristiques et avantages de l'invention ressortiront de la description détaillée qui va suivre en référence aux figures annexées sur lesquelles :
- les figures 1a et 1b présentent des exemples de dispositifs immergés de filtration conformes à l'invention ;
- la figure 2 présente une partie d'un dispositif immergé de filtration conforme à l'invention ;
- la figure 3 présente une vue en coupe d'un module à clapet pour un dispositif immergé de filtration conforme à l'invention ;
- les figures 4a et 4b présentent des éléments d'un bol de filtration pour un dispositif immergé de filtration conforme à l'invention ;
- les figures 5(a) et (b) présentent des éléments d'un conduit de vidange pour un dispositif immergé de filtration conforme à l'invention ;
- la figure 6 présente un système de filtration selon un premier mode de réalisation de l'invention ;
- la figure 7 présente un système de filtration selon un deuxième mode de réalisation de l'invention ;
- les figures 8a à 8d présentent un clapet de décharge pour un dispositif immergé de filtration conforme à l'invention ;
- les figures 9a et 9b présentent un clapet multi-trous pour un dispositif immergé de filtration conforme à l'invention ;
- la figure 10 présente deux clapets automatiques inclus dans le système de filtration conforme à l'invention.

### DESCRIPTION DETAILLEE DE L'INVENTION

Dans la partie descriptive, les mêmes références sur les figures pourront être utilisées pour des éléments de même nature. De plus, les figures sont des représentations schématiques qui, dans un objectif de lisibilité, ne sont pas nécessairement à l'échelle.

L'invention concerne un dispositif 100 immergé dans l'eau d'un bassin (ou d'une piscine) 200, utilisé pour la filtration de l'eau dudit bassin 200.

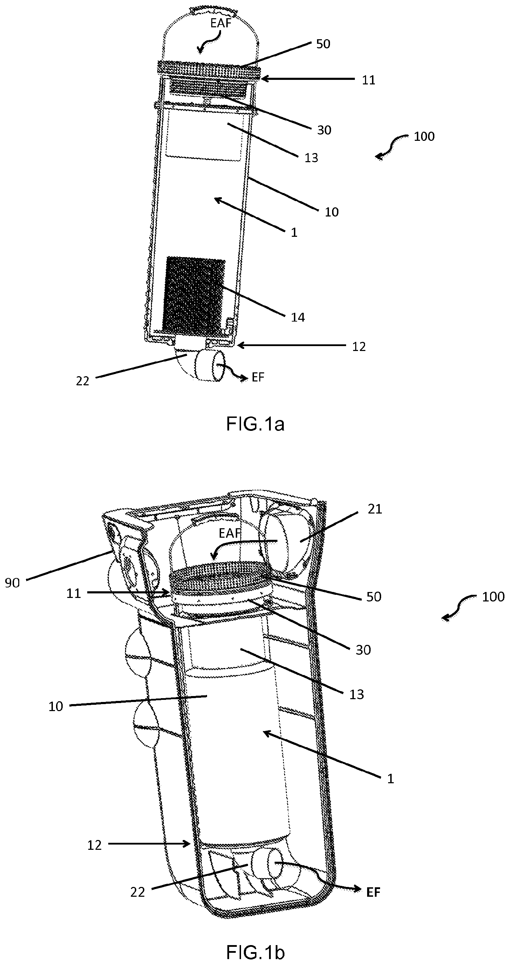

Le dispositif de filtration 100 comprend un bol de filtration 10, préférentiellement de forme cylindrique (figures 1a, 1b).

Dans le contexte de l'invention, le dispositif immergé de filtration 100 est configuré pour recueillir directement l'eau à filtrer EAF du bassin 200, au niveau d'une première extrémité 11 du bol de filtration 10 ; ladite première extrémité 11 débouche en pratique dans un caisson 90 rempli par l'eau du bassin via une bouche 21, sans canalisation intermédiaire (figure 1b). L'absence de canalisations ou tuyauteries entre l'entrée (première extrémité 11) du dispositif de filtration 100 et l'eau du bassin évite les pertes de charge dans le système de filtration.

D'autre part, le dispositif immergé 100 est relié, au niveau d'une seconde extrémité 12 du bol de filtration 10, à un conduit de sortie 22 (appelé premier conduit de sortie 22) de l'eau filtrée EF. Nous verrons par la suite comment le premier conduit de sortie 22 est en communication fluidique avec un deuxième conduit de refoulement 60 connecté à une buse de refoulement 70, immergée dans l'eau du bassin 200, destinée à renvoyer l'eau filtrée EF dans le bassin 200.

Le bol de filtration 10 comporte, à l'intérieur de ses parois avantageusement cylindriques et entre sa première extrémité 11 et sa seconde extrémité 12, un filtre 1 tel que par exemple un filtre à sable ; bien-sûr, le filtre 1 pourra alternativement consister en un filtre à diatomées, un filtre à fibres, un filtre à pellets plastique alvéolé ou tout autre type de filtre.

Selon un premier mode de mise en œuvre, le bol de filtration 10 comprend un panier tamis 13 à proximité de sa première extrémité 11, une colonne de sable 1 (ou de toutes autres matières solides ou fibreuses aptes à filtrer) et un filtre à plancher 14 solidaire de sa seconde extrémité 12. Le panier tamis 13 d'une part, et le filtre à plancher 14 d'autre part, permettent de maintenir la colonne de sable dans le bol de filtration 10, évitant que les grains de sable ne soient entrainés par la circulation de l'eau.

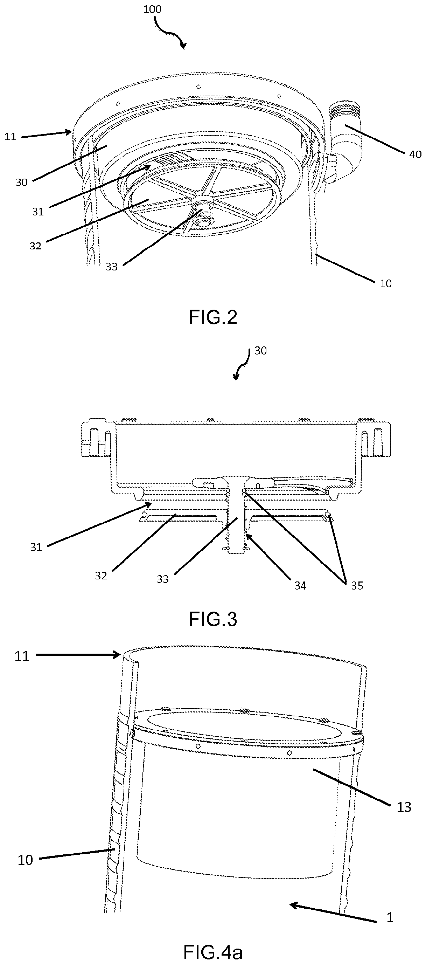

Avantageusement, le panier tamis 13 (figure 4a) présente une forme cylindrique et joue le rôle de tamis, empêchant le sable d'accéder à une zone au-dessus du panier tamis 13, en direction de la première extrémité 11 du bol de filtration 10. La taille du tamis de ce panier 13 est par exemple de 550 microns.

Selon un deuxième mode de mise en œuvre, le bol de filtration 10 comprend une colonne de sable 1 (ou de toutes autres matières solides ou fibreuses aptes à filtrer) et un filtre à plancher 14 solidaire de sa seconde extrémité 12, sans panier tamis 13 à proximité de sa première extrémité 11. En effet, le panier tamis 13, qui évite que les grains de sable ne soient entrainés par la circulation de l'eau lors du rétro-lavage du dispositif de filtration 100, dans le premier mode de mise en œuvre précité, n'est pas indispensable si la pression d'eau utilisée lors du rétro-lavage est adaptée pour ne pas disperser et soulever la colonne de sable du bol de filtration 10 (ce point sera abordé plus loin).

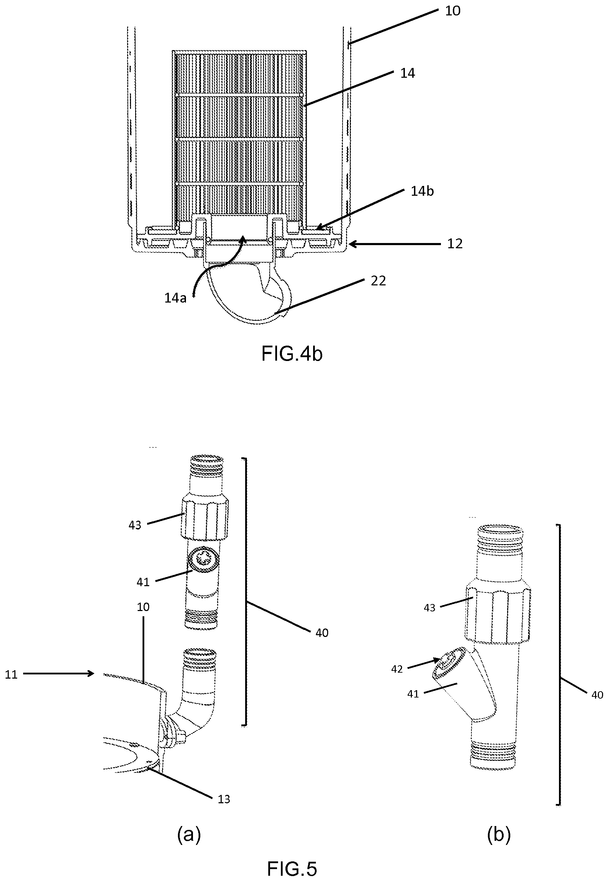

Avantageusement, pour l'un et l'autre des modes de mise en œuvre précités, le filtre à plancher 14 présente une forme cylindrique et joue le rôle de tamis, empêchant le sable d'accéder à une zone en-dessous du filtre à plancher 14, en direction de la seconde extrémité 12 du bol de filtration 10. Il est composé de fils d'acier inoxydable ou plastique (figure 4b), comme pourra également l'être le panier tamis 13. Les fils présentent une épaisseur de 4 mm, un profil triangulaire et sont espacés les uns des autres de moins de 500 microns.

L'ouverture 14a du filtre à plancher 14 communique avec le premier conduit de sortie 22 de l'eau filtrée EF ; une collerette 14b du filtre à plancher 14, disposée autour de l'ouverture 14a, est fixée de manière étanche à la seconde extrémité 12 du bol de filtration 10.

Le dispositif de filtration 100 immergé comprend en outre un module à clapet 30, solidaire de la première extrémité 11 du bol de filtration 10. Dans l'exemple illustré sur la figure 1b, le module à clapet 30 se situe au-dessus du panier tamis 13.

Le module à clapet 30 est configuré pour autoriser la circulation de l'eau de la première extrémité 11 du bol de filtration 10 (entrée de l'eau à filtrer EAF) vers sa seconde extrémité 12 (sortie de l'eau filtrée EF), c'est-à-dire une circulation d'eau selon un courant de filtration.

Par ailleurs, le module à clapet 30 est configuré pour bloquer le refoulement de l'eau à travers la première extrémité 11 dans deux situations :
- soit en l'absence de courant de circulation de l'eau,
- soit lorsque la circulation d'eau s'opère de la seconde extrémité 12 vers la première extrémité 11, c'est-à-dire selon un « contre-courant » (de sens opposé au courant de filtration, en mode rétro-lavage).

La circulation de l'eau à contre-courant permet de nettoyer le bol de filtration 10 par rétro-lavage, en chassant les particules qui encrassent le filtre à plancher 14 et le sable, vers le panier tamis 13 (lorsqu'il est présent) et/ou vers le module à clapet 30. Le tamis du panier tamis 13 étant plus large que celui du filtre à plancher 14, il laisse passer lesdites particules. Le panier tamis 13 peut néanmoins bloquer certaines particules ou filaments et progressivement s'encrasser : c'est pourquoi un bol de filtration 10 sans panier tamis 13 peut parfois être avantageux (deuxième mode de mise en œuvre précédemment énoncé).

Avantageusement, le clapet 32 est mobile selon un axe 33 parallèle à l'axe du bol de filtration 10 et libère ou obture l'ouverture à clapet 31 selon le courant de circulation d'eau (figures 2 et 3). L'ouverture à clapet 31 pourra présenter un diamètre compris entre 50% et 90% du diamètre de la section du bol de filtration 10.

Dans la configuration à contre-courant, le clapet 32 du module à clapet 30 obture l'ouverture 31 du fait de la présence d'un ressort 34. Dans l'exemple illustré en figure 3, ledit ressort est disposé sur l'axe 33, en appui contre la face inférieure du clapet 32, et permet de maintenir la position fermée du clapet 32 (ouverture 31 obturée) lorsque l'eau ne circule pas selon le courant de filtration (c'est-à-dire dans les situations de non circulation ou de circulation à contre-courant). Des joints 35 sont avantageusement prévus au niveau de la liaison entre le clapet 32 et l'axe 33 et au niveau de la liaison entre le clapet 32 et le pourtour de l'ouverture 31, pour assurer l'étanchéité du module à clapet 30, en position fermée.

Lorsque l'eau circule selon le courant de filtration (c'est-à-dire que l'eau est aspirée par le premier conduit de sortie 22), la dépression de l'eau sur le clapet 32 libère l'ouverture 31 et autorise ainsi la circulation de l'eau à filtrer EAF depuis la première extrémité 11 à travers le bol de filtration 10.

Le dispositif de filtration 100 comprend également un conduit de vidange 40, en communication avec le bol de filtration 10. Son rôle est d'évacuer vers les égouts, l'eau chargée de particules (eau du rétro-lavage) qui traverse le panier tamis 13 (lorsqu'il est présent) et/ou qui arrive à proximité du module à clapet 30, à contre-courant.

Le conduit de vidange 40 est situé à proximité du module à clapet 30, entre ce dernier et le panier tamis 13 (quand il est présent).

Comme illustré sur la figure 2, l'ouverture à clapet 31 du module à clapet 30 est avantageusement déportée par rapport à la première extrémité 11 vers l'intérieur du bol de filtration 10, selon l'axe de révolution dudit bol 10. Et le conduit de vidange 40 est préférentiellement en communication avec le bol 10 dans une zone située entre la première extrémité 11 et l'ouverture à clapet 31 (figure 2).

Dans le cas d'un rétro-lavage, l'ouverture à clapet 31 étant obturée (circulation à contre-courant de l'eau), l'eau de rétro-lavage est évacuée par le conduit de vidange 40.

Le conduit de vidange 40 comprend préférentiellement un clapet de désamorçage 41 (figures 5(a) et 5(b)). Lors du rétro-lavage du dispositif immergé 100, la pression d'eau de lavage dans le conduit de vidange 40 pousse le clapet de désamorçage 41 qui vient par l'intermédiaire de son joint obturer un orifice 42 : l'eau de lavage continue alors son chemin dans le conduit de vidange 40, en direction des égouts. A la coupure du rétro-lavage la pression d'eau chute et le clapet de désamorçage 41 s'ouvre, laissant passer l'air et désamorçant ainsi le siphon (conduit de vidange 40) : cela évite que l'eau ne continue à s'écouler par le conduit de vidange 40 après l'arrêt de la circulation à contre-courant.

Dans certaines configurations de bassins, le conduit de vidange 40 pourra être directement raccordé à un conduit de trop-plein, ce dernier ayant une première extrémité maintenue dans une manchette de réglage du niveau de l'eau dans le bassin et une deuxième extrémité raccordée aux égouts. Un clapet anti-retour est avantageusement monté sur le conduit de trop-plein, entre sa première extrémité et le raccordement du conduit de vidange 40, pour autoriser la circulation de l'eau du bassin vers les égouts (en cas de trop plein) mais éviter que l'eau de rétro-lavage venant du conduit de vidange 40 ne parte vers le bassin plutôt que vers les égouts.

Dans d'autres configurations de bassins, le conduit de vidange 40 comprendra à son embout, un raccord rapide 43 (figure 5b) pour permettre de raccorder un tuyau d'évacuation vers les égouts.

Le dispositif immergé de filtration 100 pourra également comprendre un panier grille 50, au-dessus du module à clapet 30 (figures 1a, 1b). Un tel panier grille 50 empêche les feuilles ou autres objets de relativement grande taille de venir boucher le module à clapet 30.

Avantageusement, le dispositif immergé de filtration 100 est maintenu dans un caisson ou une coque en matière plastique 90 intégrée au bassin 200 ou à un élément du bassin (par exemple une échelle), ou disposée sur un bord du bassin 200 (figure 1b). La figure 1b présente une vue tronquée de la coque 90 ; celle-ci est remplie de l'eau du bassin 200 sur toute sa hauteur.

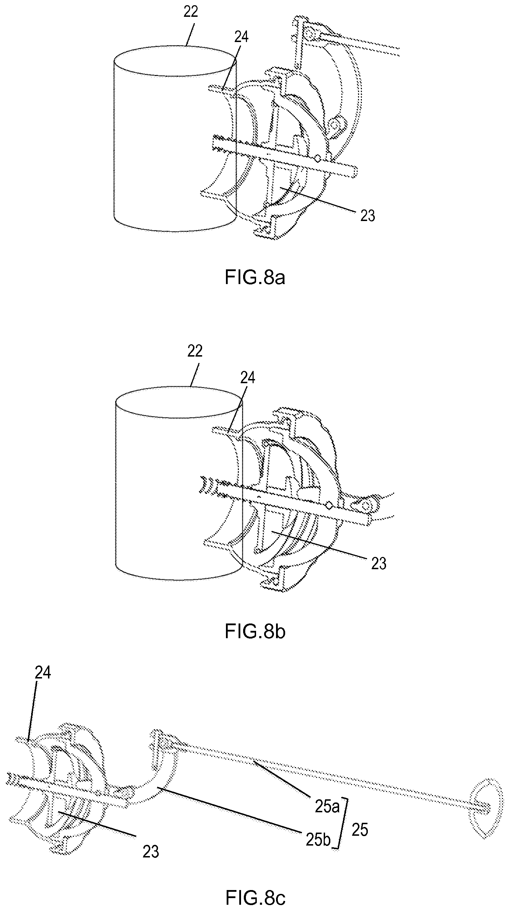

Selon une variante avantageuse, le dispositif immergé de filtration 100 comporte un clapet de décharge 23, positionné sur une dérivation 24 du premier conduit de sortie 22 par exemple, par le biais d'un té (figures 8a à 8d). Rappelons que le premier conduit de sortie 22 ainsi que sa dérivation 24 sont immergés dans l'eau du bassin 200 remplissant la coque 90. Le clapet de décharge 23 est donc soumis, d'un côté à la pression d'eau du bassin 200 et de l'autre côté à la pression d'eau existant dans le premier conduit de sortie 22. Son rôle est de s'ouvrir pour by-passer le dispositif de filtration 100, en mode filtration, lorsque la dépression dans le premier conduit de sortie 22 atteint un certain seuil, ledit seuil étant représentatif d'un colmatage au moins partiel du dispositif de filtration 200.

En pratique, le clapet de décharge 23 pourra se présenter sous la forme illustrée en figures 8a et 8b : le corps du clapet de décharge 23 est maintenu en position fermée par un ressort calibré. Lorsque la dépression à l'intérieur du premier conduit de sortie 22 arrive à contrecarrer l'action du ressort, le corps du clapet de décharge 23 se déplace vers l'intérieur de la dérivation 24, de manière laisser entrer l'eau du bassin 200 dans le premier conduit de sortie 22. Le dispositif de filtration 100 est ainsi by-passé. Le colmatage de ce dernier n'induit donc pas de détérioration, par exemple au niveau de la pompe, du système de filtration (qui va être décrit plus en détail plus loin).

En mode rétro-lavage, la pression de l'eau qui circule dans le premier conduit 22 vers la colonne de filtration 10 participe, avec l'action du ressort, à maintenir le corps du clapet de décharge 23 plaqué (un joint torique assurant l'étanchéité) et à empêcher la communication avec l'eau du bassin 200 à l'extérieur de la dérivation 24.

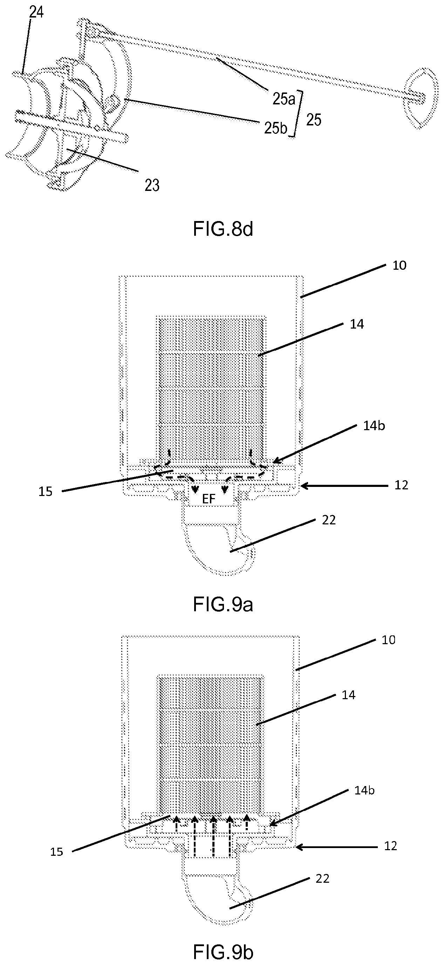

Selon une variante, une tringlerie 25 est associée au clapet de décharge 23 pour permettre de manœuvrer manuellement ledit clapet 23 (figures 8c et 8d). Par exemple, la tringlerie 25 pourra comprendre une tige 25a reliée à une came 25b qui de par sa forme et son axe de rotation va appuyer sur le corps du clapet de décharge 23 lorsque l'on tire sur la tige 25a, autorisant alors le passage de l'eau du bassin dans le premier conduit de sortie 22 et by-passant le dispositif de filtration 100 (figure 8c). La position ouverte est maintenue grâce à la forme de la came 25b. Pour refermer le clapet de décharge 23, on repousse la tige 25a pour libérer le point dur de la came 25b, ce qui relâche le ressort refermant ainsi automatiquement le clapet de décharge 23 (figure 8d).

Cette variante est particulièrement intéressante pour obtenir un débit d'eau maximum dans le cas de l'utilisation de la nage à contre-courant dans le bassin 200.

Selon une autre variante avantageuse, le dispositif immergé de filtration 100 comporte un clapet multi-trous 15 au niveau de la seconde extrémité 12 du bol de filtration 10, entre le filtre à plancher 14 et le premier conduit de sortie 22 (figure 9a et 9b). En mode filtration, c'est-à-dire lorsque l'eau circule de la première extrémité 11 du bol de filtration 10 vers sa seconde extrémité 12, le clapet multi-trous 15 est configuré pour être en position ouverte et laisser passer l'eau filtrée du bol de filtration 10 dans le premier conduit de sortie 22 (figure 9a). En mode rétro-lavage, c'est-à-dire lorsque l'eau circule de la seconde extrémité 12 du bol de filtration 10 vers sa première extrémité 11, le clapet multi-trous 15 est configuré pour être en position fermée. L'eau venant du premier conduit 22 et destinée à traverser le bol de filtration 10 pour le nettoyer ne peut alors passer que par les orifices aménagés dans le corps du clapet multi-trous 15. Les orifices sont uniformément répartis sur la surface du corps de clapet. Le clapet multi-trous 15 permet de mieux canaliser et orienter le flux d'eau venant du premier conduit 22 : cela permet de nettoyer la colonne de sable, sans mettre ledit sable en suspension. La conception du clapet multi-trous 15 (diamètre, nombre et positions des orifices), basée sur le ratio de la surface ouverte (orifices) par rapport au débit d'eau entrant, permet d'assurer la puissance de nettoyage, sans générer de perturbation. A titre d'exemple, les orifices pourront présenter un diamètre d'environ 2 mm et former une surface ouverte comprise entre 3% et 20% de la surface du corps du clapet 15.

L'utilisation d'un tel clapet multi-trous 15 peut être particulièrement avantageuse pour le deuxième mode de mise en œuvre décrit précédemment, dépourvu de panier tamis 13, car elle permet de limiter la mise en suspension du sable et donc les risques d'entrainement du sable via le conduit de vidange 40.

L'invention concerne également un système de filtration 150 pour un bassin 200 comprenant d'une part, un dispositif immergé de filtration 100 tel que précédemment décrit, et d'autre part, un dispositif de pompage 110.

Le dispositif de pompage 110 comprend une pompe 111, le premier conduit de sortie 22 de l'eau filtrée, et le deuxième conduit de refoulement 60 de l'eau filtrée dans le bassin 200.

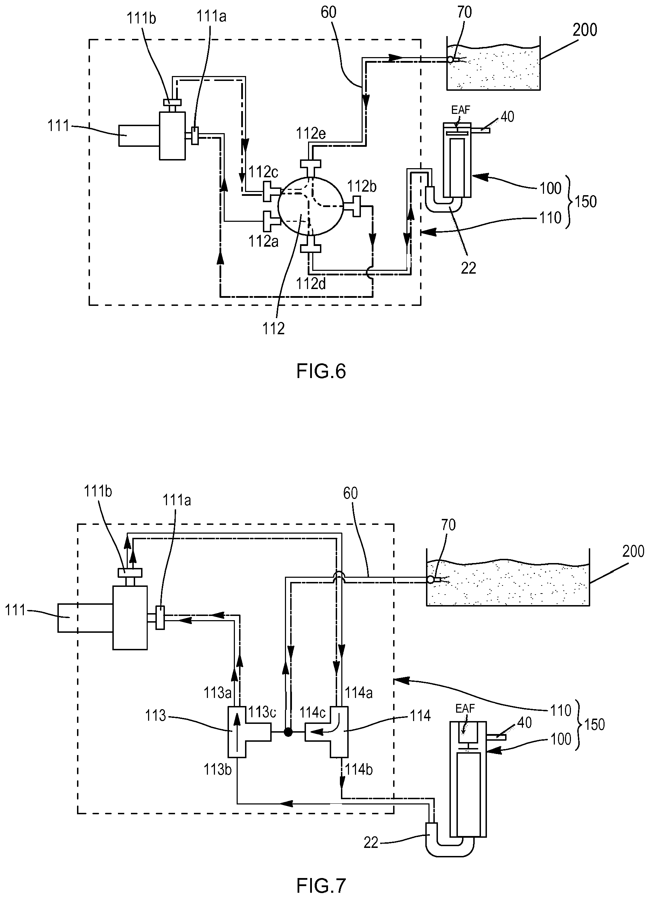

La pompe 111 comporte une entrée 111a, au niveau de laquelle l'eau est aspirée, et une sortie 111b, au niveau de laquelle l'eau est refoulée. Le premier conduit de sortie 22 de l'eau filtrée est connecté à la seconde extrémité du bol de filtration 10. Le deuxième conduit de refoulement 60 est connecté à une buse de refoulement 70 immergée dans le bassin 200 (figures 6 et 7). Notons que le dispositif de filtration 100 a été représenté en dehors du bassin 200 sur les figures 6 et 7 pour faciliter la visualisation des circuits d'eau, alors qu'il est immergé dans l'eau du bassin 200, comme décrit précédemment.

Avantageusement, la pompe 111 comporte un variateur de vitesse. En plus de l'avantage lié au gain d'énergie dans les phases de démarrage et d'arrêt de la pompe 111, le variateur de vitesse permet de créer des cycles de filtration et rétro-lavage optimisés, permettant d'accroitre la performance du dispositif de filtration 100, par rapport à un système à vitesse constante.

De manière également avantageuse, le moteur de la pompe 111 est de type « brushless ». La technologie de ce type de moteur est conçue pour supprimer les contacts entre les parties fixes (stator) et les parties mobiles (rotor), limitant ainsi les frottements et vibrations et par là même diminuant la chaleur perdue et l'usure des composants mécaniques. Dans le contexte du dispositif de pompage 110, l'utilisation d'un moteur « brushless » permet de consommer environ 10% à 20% d'énergie en moins qu'un moteur asynchrone classique, avec un débit équivalent, tout en assurant une puissance supérieure au moteur asynchrone et en ayant l'avantage d'avoir un couple de fonctionnement constant dès le démarrage du moteur jusqu'à la phase de régime permanent. Le moteur « brushless » peut également permettre de diminuer l'encombrement général de la pompe 111.

Le dispositif de pompage 110 selon l'invention est apte à faire circuler l'eau sélectivement :
- selon un courant de filtration, du premier conduit de sortie 22 vers le deuxième conduit de refoulement 60,
- ou selon un contre-courant, du deuxième conduit de refoulement 60 vers le premier conduit de sortie 22, pour le rétro-lavage du bol de filtration 10.

Pour cela, selon un premier mode de réalisation illustré sur la figure 6, le dispositif de pompage 110 comprend une vanne à cinq voies 112. La configuration de connexion des différentes voies 112a-112e avec les autres éléments du dispositif de pompage 110 permet la circulation sélective de l'eau selon un courant de filtration ou selon un contre-courant.

En pratique, la vanne à cinq voies 112 est en connexion fluidique :
- avec l'entrée 111a de la pompe 111, au niveau d'une première voie 112a et d'une deuxième voie 112b ;
- avec la sortie 111b de la pompe 111, au niveau d'une troisième voie 112c ;
- avec le conduit de sortie 22 de l'eau filtrée EF, au niveau d'une quatrième voie 112d ;
- et avec le conduit de refoulement 60 de l'eau filtrée EF dans le bassin, au niveau d'une cinquième voie 112e.

Dans une première configuration, où la première voie 112a est en communication avec la quatrième voie 112d, et la troisième voie 112c est en communication avec la cinquième voie 112e, la pompe 111 génère une aspiration de l'eau du côté de la seconde extrémité 12 du bol de filtration, qui permet d'établir une circulation de l'eau selon le courant de filtration. En effet, du fait de l'aspiration de la pompe 111, l'eau à filtrer EAF du bassin 200, recueillie par le dispositif immergé de filtration 100 au niveau de la première extrémité 11 du bol de filtration 10, va passer par l'ouverture 31 du module à clapet 30, traverser le bol de filtration 10 pour être filtrée (EF), sortir par le conduit de sortie 22, et atteindre le conduit de refoulement 60 pour finalement être refoulée dans le bassin 200 via la buse de refoulement 70 (circulation illustrée en trait plein sur la figure 6).

Dans une deuxième configuration, où la deuxième voie 112b est en communication avec la cinquième voie 112e, et la troisième voie 112c est en communication avec la quatrième voie 112d, la pompe 111 génère une aspiration de l'eau du bassin 200 au niveau de la buse de refoulement 70, qui permet d'établir une circulation de l'eau selon le contre-courant de rétro-lavage. En effet, l'eau aspirée par la pompe 111 est ensuite refoulée dans le conduit de sortie 22, puis dans le bol de filtration 10, à contre-courant, de la deuxième extrémité 12 vers la première extrémité 11 (circulation illustrée en trait discontinu sur la figure 6). L'eau de rétro-lavage va ainsi se charger de particules liées à l'encrassement des éléments du bol de filtration 10 (filtre à plancher 14, colonne de sable, éventuellement panier tamis 13), au fur et à mesure de sa traversée du bol de filtration 10 à contre-courant. Du fait de la présence du module à clapet 30, l'eau de rétro-lavage ne peut pas traverser la première extrémité 11 et être introduite dans le bassin ; elle est évacuée par le conduit de vidange 40 situé entre le panier tamis 13 et le module à clapet 30.

Selon un deuxième mode de réalisation illustré sur la figure 7, le dispositif de pompage 110 comprend deux vannes à trois voies 113,114. La configuration de connexion des voies 113a,113b,113c de la première vanne 113 et des voies 114a,114b,114c de la deuxième vanne 114, avec les autres éléments du dispositif de pompage 110 permet la circulation sélective de l'eau selon un courant de filtration ou selon un contre-courant.

En pratique, la première vanne à trois voies 113 est en connexion fluidique :
- avec l'entrée 111a de la pompe 111, au niveau de sa première voie 113a,
- avec le conduit de sortie 22 d'eau filtrée EF, au niveau de sa deuxième voie 113b,
- avec le conduit de refoulement 60, au niveau de sa troisième voie 113c.

La deuxième vanne à trois voies 114 quant à elle est en connexion fluidique :
- avec la sortie 111b de la pompe 111, au niveau de sa première voie 114a,
- avec le conduit de sortie 22 d'eau filtrée EF, au niveau de sa deuxième voie 114b,
- avec le conduit de refoulement 60, au niveau de sa troisième voie 114c.

Dans une première configuration de ce deuxième mode de réalisation, où la première voie 113a et la deuxième voie 113b de la première vanne 113 sont en communication, et où la première voie 114a et la troisième voie 114c sont en communication, la pompe 111 génère une aspiration de l'eau via le conduit de sortie 22, du côté de la seconde extrémité 12 du bol de filtration 10, qui permet d'établir une circulation de l'eau selon le courant de filtration. Du fait de l'aspiration de la pompe 111, l'eau à filtrer EAF du bassin 200, recueillie par le dispositif immergé de filtration 100 au niveau de la première extrémité 11 du bol de filtration 10, va passer par l'ouverture 31 du module à clapet 30, traverser le bol de filtration 10 pour être filtrée (EF), sortir par le conduit de sortie 22, et atteindre le conduit de refoulement 60 pour être refoulée dans le bassin 200 via la buse de refoulement 70 (circulation illustrée en trait plein sur la figure 7).

Dans une deuxième configuration, où la première voie 113a et la troisième voie 113c de la première vanne 113 sont en communication, et où la première voie 114a et la deuxième voie 114b sont en communication, la pompe 111 génère une aspiration de l'eau du bassin 200 au niveau de la buse de refoulement 70, qui permet d'établir une circulation de l'eau selon le contre-courant de rétro-lavage. L'eau aspirée par la pompe 111 est ensuite refoulée dans le conduit de sortie 22, puis dans le bol de filtration 10, à contre-courant, de la deuxième extrémité 12 vers la première extrémité 11. L'eau de rétro-lavage va ainsi se charger de particules liées à l'encrassement des éléments du bol de filtration 10 (filtre à plancher 14, colonne de sable, éventuellement panier tamis 13), au fur et à mesure de sa traversée du bol de filtration 10 à contre-courant. Du fait de la présence du module à clapet 30, l'eau de rétro-lavage ne peut pas traverser la première extrémité 11 et être introduite dans le bassin ; elle est évacuée par le conduit de vidange 40 situé entre le panier tamis 13 et le module à clapet 30.

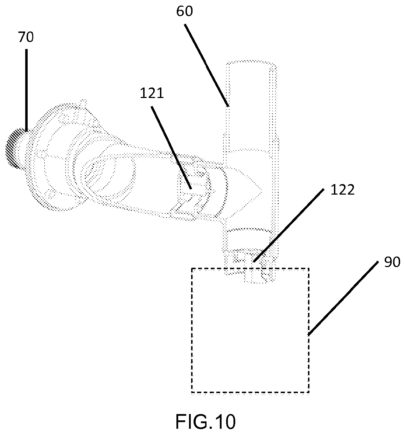

Dans les deux modes de réalisation décrits, il est fait mention d'aspirer l'eau du bassin 200 au niveau de la buse de refoulement 70 afin d'établir une circulation de l'eau selon le contre-courant de rétro-lavage. Avantageusement, pour répondre aux normes de sécurité concernant le risque d'aspiration (de succion) au niveau de la buse de refoulement 70 qui est directement accessible aux utilisateurs dans le bassin 200, le système de filtration 150 comprend deux clapets de sécurité 121,122, automatiques, positionnés sur deux branches communiquant avec le conduit de refoulement 60, juste avant la buse de refoulement 70 (figure 10). Les deux branches pourront par exemple être réalisées par un té monté sur le conduit de refoulement 60.

Le premier clapet de sécurité 121, sur une première branche reliée à la buse de refoulement 70, est configuré pour s'ouvrir quand la circulation d'eau est établie selon le courant de filtration, c'est-à-dire quand de l'eau filtrée EF est refoulée par ladite buse 70. Le premier clapet de sécurité 121 est par ailleurs configuré pour se fermer quand la circulation d'eau est établie selon le contre-courant de rétro-lavage, c'est-à-dire lorsque de l'eau du bassin est aspirée. On prévient ainsi toute aspiration d'eau directement via la buse 70.

Le deuxième clapet de sécurité 122 est situé sur une deuxième branche en communication avec l'intérieur de la coque ou caisson 90 dans lequel est maintenu le dispositif de filtration 100. Cette coque 90 étant immergée, elle contient l'eau du bassin 200. Le deuxième clapet de sécurité 122 est configuré pour se fermer quand la circulation d'eau est établie selon le courant de filtration, c'est-à-dire quand de l'eau filtrée EF arrive du conduit de refoulement 60. Le deuxième clapet de sécurité 122 est par ailleurs configuré pour s'ouvrir quand la circulation d'eau est établie selon le contre-courant de rétro-lavage : l'eau du bassin 200 est ainsi aspirée à l'intérieur de la coque 90, qui est un espace non directement accessible aux utilisateurs du bassin.

Le système de filtration 150 selon l'invention, comprenant le dispositif immergé de filtration 100 et le dispositif de pompage 110 selon l'un ou l'autre des modes de réalisation décrits, constitue un système à filtre immergé, compatible avec un rétro-lavage, donc limitant les étapes de manutention et de lavage manuel des éléments du filtre, comme habituellement effectué pour les filtres immergés.

Le dispositif immergé de filtration 100 prévient efficacement le refoulement de l'eau de rétro-lavage dans le bassin 200 grâce au module à clapet 30 et permet l'évacuation de cette eau encrassée par le conduit de vidange 40.

Le dispositif de pompage 110 propose une solution efficace et fiable de gestion de la circulation de l'eau, selon un courant de filtration et selon un contre-courant de rétro-lavage.

Le système de filtration 150 peut être utilisé pour tout type de bassin ou piscine.

Bien entendu, l'invention n'est pas limitée aux modes de réalisation décrits et on peut y apporter des variantes de réalisation sans sortir du cadre de l'invention tel que défini par les revendications.

## Revendications

1. Dispositif immergé (100) de filtration de l'eau d'un bassin (200), comprenant un bol de filtration (10) présentant une première extrémité (11) pour recueillir l'eau à filtrer (EAF) du bassin (200) et une seconde extrémité (12) destinée à être reliée à un premier conduit de sortie (22) de l'eau filtrée (EF), le dispositif (100) étant **caractérisé en ce qu'**il comprend :
• Un module à clapet (30), solidaire de la première extrémité (11) du bol de filtration (10), pour bloquer le refoulement de l'eau à travers la première extrémité (11), lors d'un rétro-lavage du bol de filtration (10) ;
• Un conduit de vidange (40), en communication avec le bol de filtration (10), pour évacuer l'eau du bol de filtration (10) lors du rétro-lavage ;
et **en ce que** :
• le bol de filtration (10) est de forme cylindrique,
• et le module à clapet (30) comprend un clapet (32) mobile selon un axe (33) parallèle à l'axe du bol de filtration (10), pour libérer ou obturer une ouverture à clapet (31), le diamètre de ladite ouverture à clapet (31) étant compris entre 50% et 90% du diamètre de la section du bol de filtration (10).

2. Dispositif immergé de filtration (100) selon la revendication précédente, dans lequel le conduit de vidange (40) comprend un clapet de désamorçage (41).

3. Dispositif immergé de filtration (100) selon l'une des revendications précédentes, dans lequel le bol de filtration (10) est un filtre à sable (1) et comprend une colonne de sable sous le module à clapet (31) et un filtre à plancher (14) solidaire de sa seconde extrémité (12).

4. Dispositif immergé de filtration (100) selon la revendication précédente, dans lequel le bol de filtration (10) comprend un panier tamis (13) entre le module à clapet (31) et la colonne de sable.

5. Dispositif immergé de filtration (100) selon l'une des deux revendications précédentes, dans lequel le filtre à plancher (14) présente une forme cylindrique et est composé de fils d'acier inoxydable ou plastique.

6. Dispositif immergé de filtration (100) selon l'une des trois revendications précédentes, comprenant un clapet multi-trous (15) présentant une pluralité d'orifices et disposé entre le filtre à plancher (14) et le premier conduit de sortie (22), ledit clapet (15) étant configuré pour être ouvert lorsque le dispositif de filtration (100) est dans un mode de filtration et pour être fermé lorsque le dispositif (100) est dans un mode de rétro-lavage.

7. Dispositif immergé de filtration (100) selon l'une des revendications précédentes, comprenant un panier grille (50) disposé sur le module à clapet (30), pour une filtration grossière de l'eau.

8. Dispositif immergé de filtration (100) selon l'une des revendications précédentes, comprenant un clapet de décharge (23) disposé dans une dérivation (24) au niveau du premier conduit de sortie (22), pour by-passer le bol de filtration (10).

9. Dispositif immergé de filtration (100) selon la revendication précédente, comprenant une tringlerie (25) pour actionner manuellement le clapet de décharge (23).

10. Système de filtration (150) pour un bassin (200) comprenant :
• un dispositif immergé de filtration (100) selon l'une des revendications précédentes,
• un dispositif de pompage (110), comprenant une pompe (111), le premier conduit de sortie (22) de l'eau filtrée (EF), et un deuxième conduit de refoulement (60) de l'eau filtrée (EF) dans le bassin (200) ; le dispositif de pompage (110) étant apte à faire circuler l'eau sélectivement, selon un courant de filtration, du premier (22) vers le deuxième (60) conduit, ou selon un contre-courant, du deuxième (60) vers le premier (22) conduit, pour le rétro-lavage du bol de filtration (10) .

11. Système de filtration (150) pour un bassin (200) selon la revendication précédente, dans lequel le dispositif de pompage (110) comprend une vanne à cinq voies (112), permettant la circulation sélective de l'eau selon un courant de filtration ou selon un contre-courant.

12. Système de filtration (150) pour un bassin selon la revendication 11, dans lequel le dispositif de pompage (110) comprend deux vannes à trois voies (113,114), permettant la circulation sélective de l'eau selon un courant de filtration ou selon un contre-courant.

13. Système de filtration (150) pour un bassin selon l'une des trois revendications précédentes, dans lequel la pompe (111) comprend un variateur de vitesse.

14. Système de filtration (150) pour un bassin selon l'une des quatre revendications précédentes, dans lequel la pompe (111) comprend un moteur « brushless ».

15. Système de filtration (150) pour bassin selon l'une des cinq revendications précédentes, comprenant deux clapets de sécurité (121,122) respectivement positionnés sur deux branches d'un té disposé sur le deuxième conduit de refoulement (60) :
• le premier clapet de sécurité (121) étant configuré pour s'ouvrir lorsque la circulation de l'eau est établie selon un courant de filtration, le deuxième clapet de sécurité (122) étant fermé,
• le deuxième clapet de sécurité (122) étant configuré pour s'ouvrir lorsque la circulation de l'eau est établie selon un contre-courant, le premier clapet de sécurité (121) étant fermé.

## Patentansprüche

1. Tauchvorrichtung (100) zum Filtern des Wassers eines Beckens (200), umfassend eine Filtertrommel (10), die ein erstes Ende (11) zum Sammeln des zu filternden Wassers (EAF) aus dem Becken (200) und ein zweites Ende (12), das dazu bestimmt ist, mit einem ersten Auslassrohr (22) des gefilterten Wassers (EF) verbunden zu werden, aufweist, wobei die Vorrichtung (100) **dadurch gekennzeichnet ist, dass** sie umfasst:
• ein Ventilmodul (30), das mit dem ersten Ende (11) der Filtertrommel (10) fest verbunden ist, um das Rückströmen des Wassers durch das erste Ende (11) während einer Rückspülung der Filtertrommel (10) zu blockieren;
• ein Abflussrohr (40), das mit der Filtertrommel (10) in Verbindung steht, um während der Rückspülung das Wasser aus der Filtertrommel (10) abzulassen; und dadurch, dass:
• die Filtertrommel (10) eine zylindrische Form hat,
• und das Ventilmodul (30) ein Ventil (32) umfasst, das entlang einer Achse (33) parallel zur Achse der Filtertrommel (10) beweglich ist, um eine Ventilöffnung (31) freizugeben oder zu schließen, wobei der Durchmesser der Ventilöffnung (31) zwischen 50 % und 90 % des Durchmessers des Querschnitts der Filtertrommel (10) beträgt.

2. Tauchvorrichtung zum Filtern (100) nach dem vorhergehenden Anspruch, wobei das Abflussrohr (40) ein Ventil zum Trockenlegen (41) umfasst.

3. Tauchvorrichtung zum Filtern (100) nach einem der vorhergehenden Ansprüche, wobei die Filtertrommel (10) ein Sandfilter (1) ist und eine Sandsäule unter dem Ventilmodul (31) und einen Filterboden (14) umfasst, der mit seinem zweiten Ende (12) fest verbunden ist.

4. Tauchvorrichtung zum Filtern (100) nach dem vorhergehenden Anspruch, wobei die Filtertrommel (10) einen Siebkorb (13) zwischen dem Ventilmodul (31) und der Sandsäule umfasst.

5. Tauchvorrichtung zum Filtern (100) nach einem der beiden vorhergehenden Ansprüche, wobei der Filterboden (14) eine zylindrische Form aufweist und aus Edelstahl- oder Kunststoffdrähten besteht.

6. Tauchvorrichtung zum Filtern (100) nach einem der drei vorhergehenden Ansprüche, umfassend ein Mehrlochventil (15), das eine Vielzahl von Öffnungen aufweist, das zwischen dem Filterboden (14) und dem ersten Auslassrohr (22) angeordnet ist, wobei das Ventil (15) so konfiguriert ist, dass es geöffnet ist, wenn sich die Filtervorrichtung (100) in einem Filtrationsmodus befindet, und dass es geschlossen ist, wenn sich die Vorrichtung (100) in einem Rückspülmodus befindet.

7. Tauchvorrichtung zum Filtern (100) nach einem der vorhergehenden Ansprüche, umfassend einen am Ventilmodul (30) angeordneten Gitterkorb (50) zur Grobfiltration des Wassers.

8. Tauchvorrichtung zum Filtern (100) nach einem der vorhergehenden Ansprüche, umfassend ein in einer Abzweigleitung (24) auf Höhe des ersten Auslassrohrs (22) angeordnetes Entlastungsventil (23) zum Umgehen der Filtertrommel (10).

9. Tauchvorrichtung zum Filtern (100) nach dem vorhergehenden Anspruch, umfassend ein Gestänge (25) zum manuellen Betätigen des Entlastungsventils (23).

10. Filtersystem (150) für ein Becken (200), umfassend:
• eine Tauchvorrichtung zum Filtern (100) nach einem der vorhergehenden Ansprüche,
• eine Pumpvorrichtung (110), umfassend eine Pumpe (111), das erste Auslassrohr (22) des gefilterten Wassers (EF) und ein zweites Rückströmrohr (60) des gefilterten Wassers (EF) in das Becken (200); wobei die Pumpvorrichtung (110) in der Lage ist, das Wasser zum Rückspülen der Filtertrommel (10) selektiv gemäß einem Filterstrom vom ersten (22) zum zweiten (60) Rohr oder gemäß einem Gegenstrom vom zweiten (60) zum ersten Rohr (22) umzuwälzen.

11. Filtersystem (150) für ein Becken (200) nach dem vorhergehenden Anspruch, wobei die Pumpvorrichtung (110) ein Fünfwegeventil (112) umfasst, das die selektive Umwälzung von Wasser gemäß einem Filterstrom oder gemäß einem Gegenstrom ermöglicht.

12. Filtersystem (150) für ein Becken nach Anspruch 11, wobei die Pumpvorrichtung (110) zwei Dreiwegeventile (113, 114) umfasst, die das selektive Umwälzen des Wassers gemäß einem Filterstrom oder gemäß einem Gegenstrom ermöglichen.

13. Filtersystem (150) für ein Becken nach einem der drei vorhergehenden Ansprüche, wobei die Pumpe (111) einen Regelantrieb Drehzahlregler umfasst.

14. Filtersystem (150) für ein Becken nach einem der vier vorhergehenden Ansprüche, wobei die Pumpe (111) einen "bürstenlosen" Motor umfasst.

15. Filtersystem (150) für ein Becken nach einem der fünf vorhergehenden Ansprüche, umfassend zwei Sicherheitsventile (121, 122), die jeweils an zwei Zweigen eines T-Stücks positioniert sind, das an dem zweiten Rückströmrohr (60) angeordnet ist:
• wobei das erste Sicherheitsventil (121) so konfiguriert ist, dass es sich öffnet, wenn die Wasserumwälzung gemäß einem Filterstrom hergestellt wird, wobei das zweite Sicherheitsventil (122) geschlossen ist,
• wobei das zweite Sicherheitsventil (122) so konfiguriert ist, dass es sich öffnet, wenn die Wasserumwälzung gemäß einem Gegenstrom hergestellt wird, wobei das erste Sicherheitsventil (121) geschlossen ist.

## Claims

1. Submerged device (100) for filtering water from a pool (200), comprising a filtration bowl (10) having a first end (11) for collecting the water to be filtered (EAF) from the pool (200) and a second end (12) intended to be connected to a first outlet pipe (22) for the filtered water (EF), the device (100) being **characterized in that** it comprises:
• a valve module (30), secured to the first end (11) of the filtration bowl (10), to block the backflow of water through the first end (11) during backwashing of the filtration bowl (10);
• a drain pipe (40), in communication with the filtration bowl (10), to evacuate water from the filtration bowl (10) during backwashing;
and **in that**:
• the filtration bowl (10) is cylindrical in shape,
• and the valve module (30) comprises a valve (32) that can be moved along a shaft (33) parallel to the axis of the filtration bowl (10), to release or close a valve opening (31), the diameter of said valve opening (31) being between 50% and 90% of the diameter of the cross-section of the filtration bowl (10).

2. Submerged filtration device (100) according to the preceding claim, wherein the drain pipe (40) comprises a deactivation valve (41).

3. Submerged filtration device (100) according to one of the preceding claims, wherein the filtration bowl (10) is a sand filter (1) and comprises a column of sand under the valve module (31) and a floor filter (14) secured to its second end (12).

4. Submerged filtration device (100) according to the preceding claim, wherein the filtration bowl (10) comprises a mesh basket (13) between the valve module (31) and the sand column.

5. Submerged filtration device (100) according to one of the two preceding claims, wherein the floor filter (14) has a cylindrical shape and is made of stainless steel or plastics wires.

6. Submerged filtration device (100) according to one of the three preceding claims, comprising a multi-hole valve (15) having a plurality of apertures and arranged between the floor filter (14) and the first outlet pipe (22), said valve (15) being configured to be open when the filtration device (100) is in a filtration mode and to be closed when the device (100) is in a backwash mode.

7. Submerged filtration device (100) according to one of the preceding claims, comprising a grate basket (50) arranged on the valve module (30), for coarse filtration of the water.

8. Submerged filtration device (100) according to one of the preceding claims, comprising a relief valve (23) arranged in a bypass (24) at the first outlet pipe (22), for bypassing the filtration bowl (10).

9. Submerged filtration device (100) according to the preceding claim, comprising a linkage (25) for manually actuating the relief valve (23).

10. Filtration system (150) for a pool (200), comprising:
• a submerged filtration device (100) according to one of the preceding claims,
• a pumping device (110), comprising a pump (111), the first outlet pipe (22) for the filtered water (EF), and a second pipe (60) for discharging the filtered water (EF) into the pool (200); the pumping device (110) being able to circulate the water selectively, in a filtration flow, from the first (22) to the second (60) pipe, or in a counter-flow, from the second (60) to the first (22) pipe, for the backwashing of the filtration bowl (10).

11. Filtration system (150) for a pool (200) according to the preceding claim, wherein the pumping device (110) comprises a five-way valve (112), allowing the selective circulation of water in a filtration flow or in a counter-flow.

12. Filtration system (150) for a pool according to claim 11, wherein the pumping device (110) comprises two three-way valves (113, 114), allowing the selective circulation of water in a filtration flow or in a counter-flow.

13. Filtration system (150) for a pool according to one of the three preceding claims, wherein the pump (111) comprises a variable speed drive.

14. Filtration system (150) for a pool according to one of the four preceding claims, wherein the pump (111) comprises a brushless motor.

15. Filtration system (150) for a pool according to one of the five preceding claims, comprising two safety valves (121, 122) respectively positioned on two branches of a tee arranged on the second discharge pipe (60):
• the first safety valve (121) being configured to open when water is flowing in a filtration flow, the second safety valve (122) being closed,
• the second safety valve (122) being configured to open when water is flowing in a counter-flow, the first safety valve (121) being closed.
